# EUROPÄISCHE PATENTSCHRIFT

(11) **EP 1 310 777 B1**
(45) Veröffentlichungstag und Bekanntmachung des Hinweises auf die Patenterteilung: **03.08.2005**
(21) Anmeldenummer: 03000938.5
(22) Anmeldetag: 28.05.1991
(51) Int. Cl.: G01F 17/00, G01F 15/18, G01M 3/32

(54) **Verfahren zur Prüfung geschlossener Behältnisse**
Method for the inspection of closed containers
Procédé d'inspection de récipients fermés

(30) Priorität: 02.06.1990 DE 4017853
(43) Veröffentlichungstag der Anmeldung: 14.05.2003
(62) Teilanmeldung aus: 97120677.6
(73) Patentinhaber: Lehmann, Martin, 5610 Wohlen (CH)
(72) Erfinder: Lehmann, Martin, 5610 Wohlen (CH)
(74) Vertreter: Troesch Scheidegger Werner AG

(56) Entgegenhaltungen:
- WO-A-80/02196
- DE-U- 8 320 684
- FR-A- 2 532 928
- GB-A- 1 102 401
- US-A- 3 831 995

## Beschreibung

Die vorliegende Erfindung betrifft ein Verfahren zum Prüfen geschlossener Behältnisse.

Aus der EP-A-0 313 678 ist ein Verfahren bekannt geworden, bei dem nebst der Dichteprüfung von Behältnissen ein Signal ausgewertet wird, welches vom Volumen des geprüften Behältnisses abhängt. Es wird ein zu prüfendes Behältnis in eine Prüfkammer eingelegt, womit das Differenzvolumen zwischen Prüfkammer und zu prüfendem Behältnis ein vom Behältnisvolumen abhängiges Volumen bildet. Dieses Volumen wird von einer voraufgeladenen Speicherkammer durch Oeffnen eines in einer Verbindungsleitung vorgesehenen Ventiles mit einem Gas unter Druck beaufschlagt, und es ergibt sich aus dem Druckverhältnis vor Oeffnen und nach Oeffnen des Ventiles eine Anzeige über das Behältnisvolumen, aufgrund der Entspannung des Druckes aus der genannten voraufgeladenen Kammer in die Prüfkammer.

Nachteilig an diesem Verfahren ist, dass, aufgrund der plötzlichen Entspannung des unter Druck stehenden Gases aus der erwähnten Kammer in die Prüfkammer, relativ lange Zeitabschnitte abgewartet werden müssen, bis transiente Vorgänge des Druckausgleichens abgeklungen sind, beispielsweise, bedingt durch die schlagartige Gasentspannung einerseits und den damit einhergehenden, unkontrollierten Gasstrom, sowie das zeitabhängige Nachgeben der Wandung des zu prüfenden Behältnisses.

Zudem muss, von einer Prüfung zur nächsten fortschreitend, die Kammer jeweils wieder auf einen SOLL-Druck geladen werden, bevor die nächste Prüfung einsetzen kann. Auch dies verlängert die Messzykluszeit.

Aus der GB 1102401 ist eine Haltevorrichtung für Flaschen bekannt, bei der ein gummielastischer Balg zwischen einem Gehäuse und dem Flaschenhals pneumatisch unter Druck gesetzt wird, um die Flasche am Gehäuse zu Fixieren und so halten zu können.

Ziel der vorliegenden Erfindung ist es, ausgehend von einem Verfahren genannter Art, ein verbessertes Verfahren vorzuschlagen.

Zu diesem Zweck zeichnet sich das Verfahren eingangs genannter Art erfindungsgemäss nach dem Wortlaut des Anspruchs 1 aus.

Die Erfindung wird anschliessend beispielsweise anhand von Figuren erläutert.

Es zeigen:
- Fig. 1a: schematisch eine nicht unter die Ansprüche fallende und nur zur Erläuterung dienende Prüfvorrichtung, bei der als vom zu prüfenden Volumen abhängiges Volumen dasjenige einer Prüfkammer eingesetzt wird,
- Fig. 1b: über der Zeit, qualitativ, den Verlauf des Druckes in der Prüfkammer bei deren Beschickung mit einem im wesentlichen konstanten Gasmassestrom zur Erläuterung der Bereitstellung eines Auswertesignals in einer ersten Variante,
- Fig. 1c: eine Darstellung analog zu derjenigen von Fig. 1b zur Erläuterung einer weiteren Bereitstellungsvariante für das Auswertesignal,
- Fig. 1d: eine Darstellung der geflossenen Gasmasse über dem Druck in der Prüfkammer, zur Darstellung einer weiteren Variante zur Bereitstellung des Auswertesignals,
- Fig. 1e: eine Darstellung über der Zeitachse der ab Messzyklusbeginn geflossenen Gasmasse zur Erläuterung einer weiteren Variante für die Bereitstellung des Auswertesignals,
- Fig. 2: eine Darstellung analog zu Fig. 1a einer ebenfalls nicht unter die Ansprüche fallenden Vorrichtung, bei der als vom zu prüfenden Volumen abhängiges Volumen direkt dasjenige eines zu prüfenden Behältnisses eingesetzt wird,
- Fig. 3: in Darstellung analog zu derjenigen von Fig. 2, schematisch, die Prüfung von Behältnisgruppen in Linie während der Fertigung der Behältnisse,
- Fig. 4: eine Längsschnittdarstellung eines Anschlusses für Behältnisse, insbesondere auch verwendet bei den Vorrichtungen gemäss den Fig. 2 und 3.

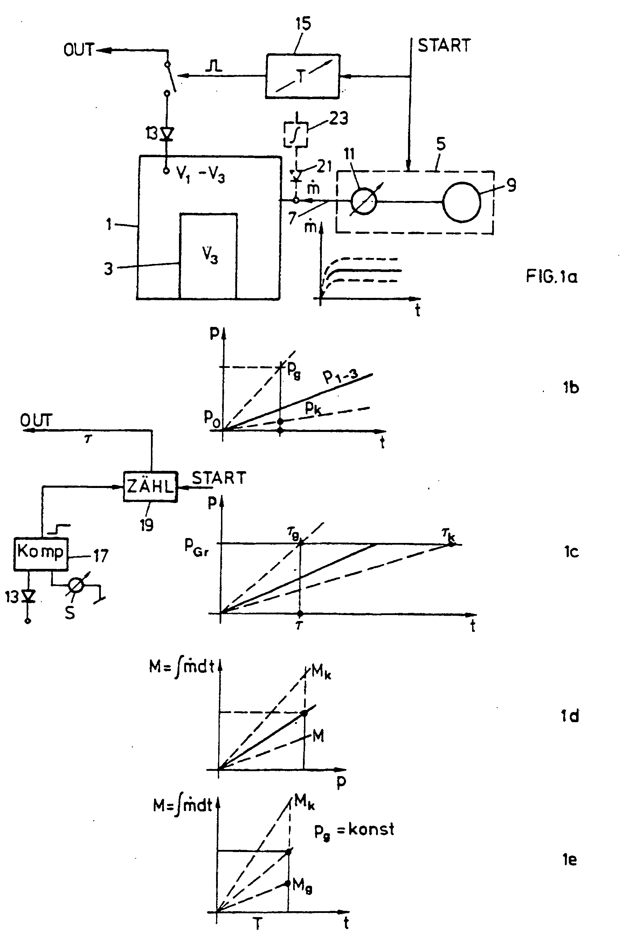

In Fig. 1a ist schematisch eine Prüfkammer 1 dargestellt, worin ein geschlossenes, gegebenenfalls mit seinem Füllgut gefülltes Behältnis 3 in eine Kammer 1 eingeführt wird. Das Einführen des zu prüfenden Behältnisses 3 mit Vo-lumen V₃ in die Kammer 1, wodurch in der Kammer das Differenzvolumen V₁ - V₃ entsteht, erfolgt durch einen hier nicht dargestellten, dichtend verschliessbaren Einfülldeckel.

An der Kammer 1 ist eine Druckgasquelle 5 über eine Verbindungsleitung 7 angeschlossen. Wie schematisch dargestellt, erlaubt die Quelle 5 grundsätzlich den über Leitung 7 dem Volumen V₁ - V₃ pro Zeiteinheit zugeführten Gasmassestrom ṁ gesteuert einzustellen, beispielsweise auf jeweils konstante Werte. Hierzu ist beispielsweise ein Speichertank 9 vorgesehen für das Druckgas sowie ein durchflussmengengeregeltes Stellglied 11, wie beispielsweise ein stetig verstellbares Ventil.

Diese höchst einfache Volumenprüfeinrichtung arbeitet, wie anhand der Fig. 1b bis 1e erläutert wird.

Nach Einbringen des zu prüfenden Volumens bzw. Behältnisses 3 wird mit Hilfe der Massestrom-ṁ-gesteuerten Quelle 5 der Fluss eines vorbestimmten Gasmassestromes ṁ, beispielsweise mit Hilfe des stetig verstellbaren Ventiles 11 eingestellt. Ueber der Zeit t steigt nun der Druck p_{1 -3} im Differenzvolumen V₁ -V₃ an. Dieser Druck wird mittels eines Drucksensors 13 erfasst.

Gleichzeitig mit der Inbetriebsetzung bzw. der Oeffnung des Ventiles 11 wird eine Zeitgebereinheit 15 gestartet, welche nach einer vorgebbaren Zeitspanne T den Ausgang des Drucksensors 13 zur weiteren Auswertung und mithin als Testauswertesignal ausliest bzw. weiterschaltet.

Wie aus Fig. 1b ersichtlich, wird der nach der einstellbaren Zeitspanne T sich in der Kammer 1 mit dem Differenzvolumen V₁ -V₃ einstellende Druck bei einem grösseren Volumen V₃ einen höheren Wert p_{g}, bei einem kleineren Volumen V₃ einen kleineren Wert pₖ erreichen.

Mithin wird der nach der einstellbaren Zeitspanne T im Differenzvolumen bzw. in dem vom zu prüfenden Volumen V₃ abhängigen Volumen erreichte Druck als Auswertesignal für den Volumentest gewertet.

In einer zweiten Variante der Auswertungen, wie in Fig. 1c dargestellt, wird anstelle einer vorgebbaren Zeit ein vorgegebener Druckwert p_{Gr}, einstellbar, vorgegeben. Hierzu wird, wie links in Fig. 1c dargestellt, der Ausgang des Drucksensors 13 einem Komparator 17 zugeführt, welchem, als Vergleichswert, ein Signal S entsprechend dem eben erwähnten Druck p_{Gr} eingegeben wird. Mit dem anhand von Fig. 1a erläuterten Startsignal wird ein Zeitzähler 19 gestartet und mit dem Komparatorausgangssignal, d.h. dann, wenn der gemessene Druck am Sensor 13 einen Wert S entsprechend dem vorgebbaren Grenzdruckwert p_{Gr} erreicht, gestoppt. Die dann am Zähler 19 erfasste Zeitgrösse τ wird als volumenanzeigendes Signal ausgewertet.

Wie im Verlauf rechts von Fig. 1c dargestellt, wird bei einem grösseren zu prüfenden Volumen V₃ die Zeitspanne τ_{g} kleiner als bei einem kleineren zu testenden Volumen, wo sie, wie qualitativ dargestellt, mit τₖ grösser wird.

In Fig. 1d ist eine weitere Variante zur Prüfsignalbereitstellung gezeigt. Mittels eines in Fig. 1a gestrichelt dargestellten Fühlers 21 wird die pro Zeiteinheit dem Differenzvolumen V₁ -V₃ zugeführte Gasmenge, der Masse- bzw. Volumenstrom ṁ, gemessen und an einer Integrationseinheit 23 über der Zeit integriert, womit die ab Beginn des Messzyklus geflossene Gasmenge erfasst ist.

Nun wird gemäss Fig. 1d wiederum ein Grenzdruck p_{Gr} vorgegeben und die ab Messzyklusbeginn geflossene Gasmenge bis zum Erreichen dieses Grenzdruckes gemessen. Ist das zu testende Volumen 3 grösser, so ist die bis zum Erreichen des Grenzdruckes geflossene Gasmenge M_{g} kleiner als bei einem kleineren zu prüfenden Volumen, wie mit Mₖ dargestellt. Das Erreichen des Grenzdruckes p_{Gr} gemäss Fig. 1d wird beispielsweise mit einem Drucksensor 13 und nachgeschaltetem Komparator 17 sowie der Vorgabe des Grenzdruckes p_{Gr}, wie links in Fig. 1c dargestellt, vorgenommen.

In Fig. 1e ist eine weitere Variante dargestellt, wie ein Auswertesignal bereitgestellt wird. Es wird eine vorgegebene Messzykluszeit T eingestellt und die ab Messzyklusbeginn geflossene Gasmenge erfasst. In der vorgegebenen Zeitspanne T fliesst, bei konstantem Förderdruck der Quelle 9 und mithin von Förderdruck p₉ und Druck im Differenzvolumen V₁ -V₃ abhängiger Fördermenge ṁ pro Zeiteinheit bei grösserem zu testendem Volumen V₃, eine geringere Gasmenge ins Differenzvolumen V₁ -V₃ ein, wie schematisch mit M_{g} eingetragen. Analog wird innerhalb der Zeitspanne T die zugeführte Gasmenge Mₖ grösser, bei einem kleineren zu prüfenden Volumen V₃.

Die ab Messzyklusbeginn geflossene Gasmenge wird beispielsweise wiederum mit dem in Fig. 1a gestrichelt dargestellten Sensor 21 und dem nachgeschalteten Integrator 23 erfasst.

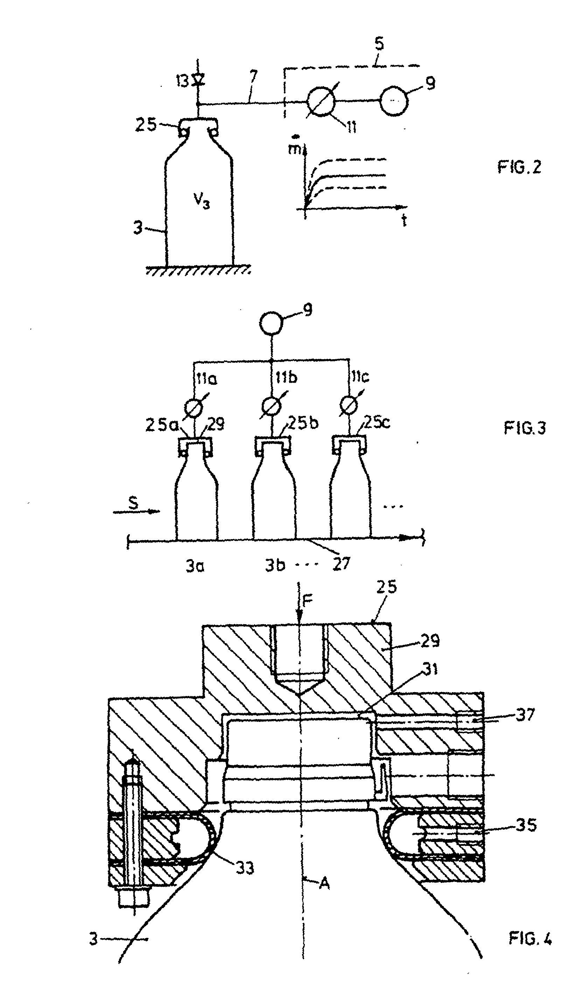

In Fig. 2 ist die zu Fig. 1a analoge Vorrichtung dargestellt, wenn das vom zu prüfenden Volumen abhängige Volumen direkt durch das Innenvolumen V₃ des zu prüfenden Behältnisses 3, wie beispielsweise einer Kunststoff-Flasche, gebildet wird. Hier wird der gegebenenfalls vorgesehene Drucksensor 13 von Fig. 1a direkt an der Förderleitung 7 zwischen einem Anschluss 25 zum dichten Anschliessen der Leitung 7 an die Oeffnung des Behältnisses 3 vorgesehen. Das Behältnis ist hier, im Unterschied zur Ausführungsvariante von Fig. 1a, ein geöffnetes Behältnis, wie eine eben hergestellte Kunststoff-Flasche. Figur 2 fällt daher ebenfalls nicht unter die Ansprüche, die auf geschlossene Behältnisse eingeschränkt sind.

Vorgehensweise und Auswertungstechnik bleiben sich gleich, wie bereits anhand der Fig. 1 erläutert worden ist.

Die letzterwähnte Technik eignet sich, wie in Fig. 3 schematisch dargestellt, ausserordentlich gut zum Testen von in einem ununterbrochenen Strom S anfallenden, eben produzierten Behältnissen 3a, 3b etc., wobei entweder über flexible Anschlüsse die Volumenprüfung während der Behältnisbewegung, beispielsweise auf einem Förderband 27, erfolgt, oder aber ein intermittierend getriebenes Förderband bzw. eine entsprechend betriebene Fördereinrichtung vorgesehen ist, wo ein Behältnis oder, wie in Fig. 3 dargestellt, vorzugsweise mehrere Behältnisse gleichzeitig der Volumenprüfung unterzogen werden.

Um bei den Vorgehensweisen gemäss den Fig. 2 bzw. 3 Dichtungsprobleme bei z.B. herstellungstoleranzbedingten Abweichungen der Dimensionen und Formen der Oeffnungsbereiche 29 der zu testenden Behältnisse zu beheben bzw. um verschiedene Behältnisse an einer Produktionslinie ohne Umstellarbeiten testen zu können, wird vorgeschlagen, die Anschlussteile 25 gemäss den Fig. 2 und 3, wie in Fig. 4 dargestellt, auszubilden. Demnach umfasst ein Anschlussteil ein Gehäuse 29, beispielsweise aus Metall oder Kunststoff, mit einer Aufnahme 31 zur Aufnahme der Oeffnungspartie des zu prüfenden Behältnisses 3, beispielsweise eines Flaschenhalses einer Kunststoff-Flasche.

Im unteren Bereich der Aufnahme 31 ist, koaxial zu einer Achse A der Aufnahme 31, ein umlaufender Balg 33 montiert, aus gummielastischem Material, und es sind an einer oder mehreren Stellen Druckmediumsleitungen 35 vorgesehen, die in den Balg 33 einmünden, bevorzugterweise für ein Druckgas.

Im weiteren umfasst ein erfindungsgemässer Anschluss eine Zuführleitung 37, welche in die Aufnahme 31 einmündet und die, sofern der erfindungsgemässe Anschluss zu Volumentestzwecken gemäss den Fig. 2 oder 3 eingesetzt wird, an die Gaszuspeisungsleitung 7 angeschlossen wird.

Durch Aufblasen des Balges 33 wird der Anschluss 25 in seinem unteren Bereich dichtend an die Oeffnungspartie bzw. den Flaschenhals des jeweils zu testenden Behältnisses 3 angelegt. Es wird ein dichter Sitz erreicht, in weiten Grenzen unabhängig von der spezifischen Ausformung bzw. Dimensionierung dieser Oeffnungspartie. Bevorzugterweise wird beim Aufbringen des Anschlusses 25, wie mit F dargestellt, Druck auf den Anschluss 25 ausgeübt, der sich über das zu prüfende Behältnis 3 auf dessen jeweilige Standfläche überträgt, so dass bei Aufblasen und dichtem Anlegen des Balges 33 an die Aussenwandung des zu prüfenden Behältnisses 3, in axialer Richtung gemäss A, kein Weichen von Anschluss 25 bzw. Behältnis 3 erfolgen kann.

In der beschriebenen Art und Weise werden erfindungsgemäß geschlossene Behältnisse rasch einer Volumenprüfung unterzogen, indem die in den Figuren dargestellten und erläuterten Auswertesignale, wie nicht eigens erläutert, aber dem Fachmann ohne weiteres erkenntlich, einer weiteren Klassierung unterzogen werden.

Durch die Steuerung der pro Zeiteinheit dem jeweiligen Volumen zugeführten Gasmenge ṁ entfallen Zeitabschnitte, in welchen Druckausgleich abgewartet werden muss, bis relevant gemessen werden kann.

Mit Hilfe des erfindungsgemäss verwendeten Anschlusses können im weiteren Behältnisse mit in weiten Grenzen unterschiedlich geformten bzw. dimensionierten Oeffnungspartien, wie Flaschenhälsen, dichtend kontaktiert werden, um die Behältnisse mit Prüfgas zu beaufschlagen.

## Patentansprüche

1. Verfahren zur Herstellung geprüfter, geschlossener Behältnisse, **dadurch gekennzeichnet, dass** man an die Öffnungspartie der Aussenwand des geschlossenen, zu prüfenden Behältnisses ein Anschlussgehäuse dichtend appliziert, indem man einen gummielastischen Balg zwischen Anschlussgehäuse und Aussenwand pneumatisch unter Druck setzt und die Prüfung über eine am Anschlussgehäuse einmündende Leitung aufgrund der Druckentwicklung zwischen Anschlussgehäuse und Öffnungspartie vornimmt.

2. Verfahren nach Anspruch 1, **dadurch gekennzeichnet, dass** man Kunststoffflaschen herstellt.

3. Verfahren nach Anspruch 1 oder 2, **dadurch gekennzeichnet, dass** man die Behältnisse aus einem Strom produzierter, zu prüfender Behältnisse herstellt.

## Claims

1. Method for producing tested closed containers,
**characterized in that** a connection housing is tightly applied on the part of the outer container wall comprising the opening of the closed container which has to be tested, by pneumatically inflating a rubber-elastic bellows between said connection housing and the outer container wall and by carrying out the testing operation via a line entering into the connection housing by taking into account the pressure development between the connection housing and said part in the outer container wall comprising the opening.

2. Method according to claim 1, **characterized in that** bottles made of plastic material are produced.

3. Method according to claims 1 or 2, **characterized in that** the containers are produced by taking them from a stream of formerly produced containers which have to be tested.

## Revendications

1. Procédé de production de récipients fermés contrôlés, **caractérisé en ce que** l'on applique une enveloppe de raccordement sur la partie de la paroi extérieure du récipient comprenant l'ouverture du récipient fermé à contrôler, ceci en gonflant pneumatiquement un soufflet en matière élastique comme du caoutchouc entre l'enveloppe de raccordement et la paroi extérieure du récipient et en procédant à l'opération de contrôle via une conduite débouchant dans l'enveloppe de connections en tenant compte du développement de la pression entre l'enveloppe de connections et la partie de la paroi extérieure du récipient.

2. Procédé selon la revendication 1, **caractérisé en ce que** l'on produit des bouteilles en plastique.

3. Procédé selon la revendication 1 ou 2, **caractérisé en ce que** l'on produit les récipients à partir d'un flux de récipients à contrôler produits préalablement.
